# EUROPÄISCHE PATENTSCHRIFT

(11) **EP 1 409 226 B1**
(45) Veröffentlichungstag und Bekanntmachung des Hinweises auf die Patenterteilung: **07.05.2008**
(21) Anmeldenummer: 02730278.5
(22) Anmeldetag: 24.05.2002
(51) Int. Cl.: B29C 49/00, B60R 5/00

(54) **HOHLKÖRPER MIT SEE/INSEL-STRUKTUR DER VERSCHWEISSUNG**
HOLLOW BODY WELDED IN THE FORM OF AN INSULAR STRUCTURE
CORPS CREUX SOUDE SOUS LA FORME D'UNE STRUCTURE INSULAIRE

(30) Priorität: 21.07.2001 DE 10135613
(43) Veröffentlichungstag der Anmeldung: 21.04.2004
(73) Patentinhaber: Polytec Automotive GmbH & Co. KG, 49393 Lohne (DE)
(72) Erfinder: KLEINT, Oliver, 82538 Geretsried (DE)
(74) Vertreter: Jönsson, Hans-Peter
(86) Internationale Anmeldenummer: PCT/EP2002/005741
(87) Internationale Veröffentlichungsnummer: WO 2003/009992

(56) Entgegenhaltungen:
- EP-A- 0 514 616
- EP-A- 1 031 404

## Beschreibung

Gegenstand der Erfindung sind Hohlkörper aus thermoplastischem Material für den Automobilbereich und ein Verfahren zu ihrer Herstellung.

Die EP 0 514 616 B1 betrifft ein Verfahren zur Herstellung von Hohlkörpern aus einem thermoplastischen Material, wobei das Verfahren folgende Schritte enthält:
a) Erhitzen von zumindest zwei Tafeln aus einem thermoplastischen Material auf ihre Plastifizierungstemperatur,
b) Einsetzen der plastifizierten Tafeln übereinander zwischen Halbformen von denen zumindest eine mit einer Vielzahl von Hohlräumen versehen ist, die miteinander über ein Netz von Kanälen in Verbindung stehen,
c) Schließen der Halbformen und Aufbringen einer Druckkraft außerhalb der Hohlräume auf die Tafeln, wobei die Druckkraft durch das mechanische Zusammendrücken der Halbformen erzeugt wird, um die zusammenpassenden Teile der Tafeln miteinander zu verbinden und unter Hitze zu verschweißen,
d) Ausbilden einer Vielzahl von hohlen Bereichen in Übereinstimmung mit den Hohlräumen, indem zwischen die Tafeln ein Fluid unter einem Druck eingespritzt wird, der ausreicht, um zumindest eine Tafel gegen die Wand der Hohlräume zu drücken, so dass die Tafeln in Übereinstimmung mit den Hohlräumen einer Formkraft unterworfen werden, die mit dem Fluid erzeugt wird,
e) Abkühlen und Aushärten des Hohlkörpers durch eine Berührung mit den Wänden der Halbformen, und
f) Öffnen der Halbformen und Entnehmen des Hohlkörpers,
wobei die Kanäle auf der Trennfläche der Halbformen angeordnet sind und von den Seitenwänden der Hohlräume verlaufen, und dass im Schritt d) zumindest eine Tafel durch den Druck des Fluids gegen die Wände der Kanäle gepresst wird.

EP A 103 1404 betrifft ein ähnliches Verfahren.

Demgegenüber besteht die Aufgabe der vorliegenden Erfindung darin, Hohlkörper aus thermoplastischem Material für den Automobilbereich zur Verfügung zu stellen, die sich durch eine Verbesserung der optischen Bauteilqualität auszeichnen.

Eine erste Ausführungsform der Erfindung besteht in dem Verfahren zur Herstellung von Hohlkörper mit hohlen Bereichen durch
- a) Erhitzen von wenigstens zwei Tafeln 1,2 aus Polypropylen, Glasfaserverstärktem Acrylnitril-Butadien-Styrol (ABS), Holzmehl gefülltem Polypropylen mit Naturfaser verstärkt oder Naturfaser-verstärktem Polypropylen mit einer Schichtdicke von jeweils 0,8 bis 3,5 mm auf ihre Plastifizierungstemperatur,
- b) Einsetzen der plastifizierten Tafeln 1,2 übereinander zwischen Halbformen 3,4 mit einer Geometrie von erhabenen Domen einer Inselstruktur entsprechend von denen wenigstens eine 4 mit einer oder mehreren Druckluftkanälen 5 versehen ist,
- c) Schließen der Halbformen 3,4 und Einblasen von Druckluft durch die Tafel 2 und partielles Verbinden der Tafeln 1,2 unter Hitze durch Verschweißen,
- d) Ausbilden einer Vielzahl von hohlen Bereichen in Übereinstimmung mit den Halbformen 3,4 durch den Druck der Druckluft, der ausreicht, um zumindest die Tafel 2 gegen die Halbform 4 zu drücken, so dass die Tafeln 1,2 in Übereinstimmung mit den Halbformen 3,4 einer Formkraft unterworfen werden,
- e) Abkühlen und Aushärten der Tafeln 1,2 durch eine Kühlung der Wände der Halbformen 3,4 und
- f) Öffnen der Halbformen 3,4 und Entnehmen des Hohlkörpers.

In einer bevorzugten Ausführungsform der Erfindung weisen die Luftkanäle der Halbform 4 und der Tafel 2 Durchmesser im Bereich **von 1 bis 3 mm auf.**

Mit Hilfe der vorliegenden Erfindung ist es beispielsweise auch möglich, leichte Trägermaterialien anschließend mit Dekorschichten zu versehen. Der Umbug der Dekorschicht um 90 ° und der Zuschnitt erfolgt in einem dem Verfahren in der Regel vorgeschalteten Arbeitsgang.

Die vorgenannte Aufgabe wird in einer weiteren Ausführungsform gelöst durch einen Hohlkörper aus thermoplastischem Material mit hohlen Bereichen für den Automobilbau aus zwei Tafeln 1,2 mit einer oder mehreren Einlassöffnungen in der der Sichtseite abgewandten Tafel 2, nämlich ein Strukturbauteil mit tragender und schlagzäher Funktionseigenschaft, ausgewählt aus Kofferraumbelag, Kofferraumboden, Türverkleidung, Hutablage, Laderaumabdeckung, Säulenverkleidung, Rückbankverkleidung, Lehnenabdeckung, Handschuhkastendeckel, Knieschutz oder Instrumententafel, erhältlich durch das soeben beschriebene Verfahren.

Das Flächenverhältnis von verschweißten zu nichtverschweißten Flächen der Tafeln 1,2 beträgt vorzugsweise im Sinne der vorliegenden Erfindung 0,2 zu 1 bis 5 zu 1, insbesondere 0,5 zu 1 bis 2 zu 1 Flächeneinheiten. Je nach gewünschtem Steifigkeitsgrad der Formteile variiert der Bereich der verschweißten Tafeln. Ein hoher Verschweißungsgrad wird dementsprechend eine größere Steifigkeit des Hohlkörpers ergeben.

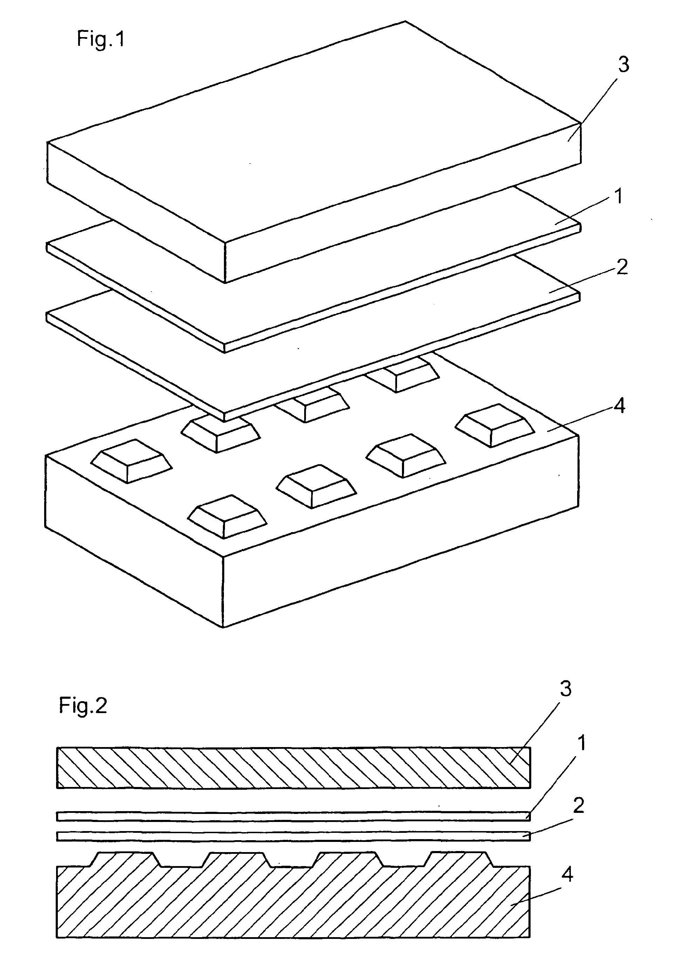

In der Fig. 1 werden die beiden Tafeln 1,2 zwischen den Halbformen 3,4 dargestellt. Die Halbform 4 weist keine Hohlräume im Sinne des Standes der Technik, sondern erhabene Dome auf. Demgemäss sind die im Stand der Technik erwähnten Kanäle zur Verteilung des Fluids nicht erforderlich, da die Druckluft im gesamten Hohlraum um die Dome zirkulieren kann.

Die Fig. 2 zeigt die Seitenansicht der beiden Tafeln 1,2 zwischen den Halbformen 3,4 vor der Plastifizierung.

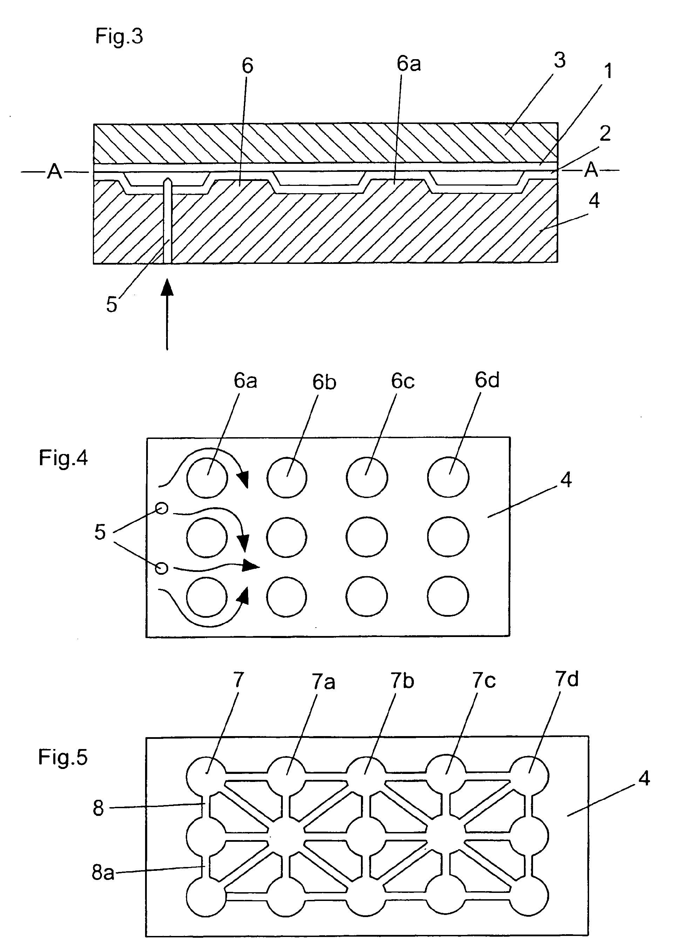

In der Fig. 3 ist die Plastifizierung der Tafeln 1,2 dargestellt, wobei sich die Tafel 2 im wesentlichen der äußeren Form der Halbform 4 anpasst. In der Fig. 3 weiter dargestellt ist die Einblasöffnung 5 zum Einbringen von Druckluft in den Hohlraum zwischen den Tafeln 1,2. Mit dieser Einblasdüse ist es möglich, Druckluft unter hohem Druck einzuspritzen und so die Hohlräume auszuformen. Erfindungsgemäß wird vorzugsweise Druckluft als Medium eingesetzt, jedoch sind prinzipiell auch andere gasförmige oder flüssige Medien einsetzbar. In der Fig. 3 sind die Dome in der Seitenansicht dargestellt.

In der Fig. 3 ist entlang der Schnittlinie A-A das Verhältnis der verschweißten zu nichtverschweißten Flächen der Tafeln 1,2 erkennbar. Entlang dieser Fläche ist weiterhin erkennbar, dass die Geometrie der Tafel 2 einer See-/Insel-Struktur entspricht. Die Inseln entsprechen dabei den mit der Tafel 1 verschweißten Oberflächen der Dome.

In der Fig. 4 werden die Halbform 4 und die dazugehörigen Dome 6a,6b,6c,6d dargestellt. Die Druckluft kann an den Domen vorbei innerhalb des Hohlkörpers zirkulieren, so dass keine Kanäle erforderlich sind.

Diese Kanäle des Standes der Technik sind in der Fig. 5 mit den Bezugszeichen 8 dargestellt. Hier wird erneut die Halbform 4 und die Hohlräume 7,7a,7b,7c,7d dargestellt, wobei die Kanäle auf der Bauteilunterseite als Rille sichtbar sind. Bedingt durch die Rillen der Unterseite wären Bauteile erhältlich nach dem Verfahren des Standes der Technik im Automobilsektor praktisch nicht einsetzbar. Mit Hilfe der vorliegenden Erfindung kann jedoch die Bauteilunterseite eben und somit optisch ansprechbar gestaltet werden.

Das Abkühlen und Aushärten der Tafeln 1,2 erfolgt beim Stand der Technik ausschließlich über den Kontakt mit den temperierten Formhälften. Im Sinne der vorliegenden Erfindung werden vorzugsweise Anschluss an die Ausformung der hohlen Bereiche durch Anlegen von Druckluft diese hohlen Bereiche mit extrem gekühlter Luft (-35 °C) gespült, um die Abkühlung der Tafeln zu beschleunigen und so die Zykluszeiten zu verkürzen. Ein Abkühlung der Halbform 3,4 ist nicht unbedingt erforderlich.

### Bezugszeichenliste:

- 1: = Tafel
- 2: = Tafel
- 3: = obere Halbform
- 4: = untere Halbform
- 5: = Einblasöffnung
- 6, 6a, 6b ....: = Dom
- 7, 7a, 7b, 7c ....: = Hohlraum
- 8, 8a...: = Hohlraumverbindungskanal

## Patentansprüche

1. Verfahren zur Herstellung von Hohlkörpern mit hohlen Bereichen durch
- a) Erhitzen von wenigstens zwei Tafeln (1,2) aus Polypropylen, Glasfaserverstärktem Acrylnitril-Butadien-Styrol (ABS), Holzmehl gefülltem Polypropylen mit Naturfaser verstärkt oder Naturfaser-verstärktem Polypropylen mit einer Schichtdicke von jeweils 0,8 bis 3,5 mm auf ihre Plastifizierungstemperatur,
- b) Einsetzen der plastifizierten Tafeln (1, 2) übereinander zwischen Halbformen (3,4) mit einer Geometrie von erhabenen Domen einer Inselstruktur entsprechend von denen wenigstens eine (4) mit einer oder mehreren Druckluftkanälen (5) versehen ist,
- c) Schließen der Halbformen (3,4) und Einblasen von Druckluft durch die Tafel (2) und partielles Verbinden der Tafeln (1,2) unter Hitze durch Verschweißen,
- d) Ausbilden einer Vielzahl von hohlen Bereichen in Übereinstimmung mit den Halbformen (3,4) durch den Druck der Druckluft, der ausreicht, um zumindest die Tafel (2) gegen die Halbform (4) zu drücken, so dass die Tafeln (1,2) in Übereinstimmung mit den Halbformen (3,4) einer Formkraft unterworfen werden,
- e) Abkühlen und Aushärten der Tafeln (1,2) durch eine Kühlung der Wände der Halbformen (3,4) und
- f) Öffnen der Halbformen (3,4) und Entnehmen des Hohlkörpers

2. Verfahren nach Anspruch 1, **dadurch gekennzeichnet, dass** man die Luftkanäle (5) der Halbform (4) und/oder der Tafel (2) Durchmesser im Bereich von 1 bis 3 mm einsetzt.

3. Hohlkörper aus thermoplastischem Material mit hohlen Bereichen für den Automobilbau aus zwei Tafeln (1,2), wobei die Geometrie einer der zwei Tafeln (1,2) einer See-/Insel-Struktur entspricht und it einer oder mehreren Einlassöffnungen in der der Sichtseite abgewandten Tafel (2), nämlich ein Strukturbauteil mit tragender und schlagzäher Funktionseigenschaft, ausgewählt aus Kofferraumbelag, Kofferraumboden, Türverkleidung, Hutablage, Laderaumabdeckung, Säulenverkleidung, Rückbankverkleidung, Lehnenabdeckung, Handschuhkastendeckel, Knieschutz oder Instrumententafel, erhältlich durch ein Verfahren gemäß Anspruch 1 oder 2.

4. Hohlkörper nach Anspruch 3, **dadurch gekennzeichnet, dass** das Flächenverhältnis von verschweißter zu nichtverschweißter Fläche den Tafeln (1,2) 0,2 zu 1 bis 5 zu 1, insbesondere 0,5 zu 1 bis 2 zu 1 beträgt.

## Claims

1. A process for producing hollow bodies with hollow portions by:
- a) heating at least two sheets (1, 2) of polypropylene, glass fiber-reinforced acrylonitrile-butadiene-styrene (ABS), polypropylene filled with wood meal and reinforced by natural fibers or polypropylene reinforced by natural fibers having a layer thickness of from 0.8 to 3.5 mm each to their plasticizing temperature;
- b) inserting the plasticized sheets (1, 2) one on top of the other between half-molds (3, 4) having a geometry of convex domes corresponding to an island structure, at least one of which (4) is provided with one or more compressed air channels (5);
- c) closing the half molds (3, 4) and introducing compressed air through sheet (2) and partially bonding the sheets (1, 2) by means of heat by welding;
- d) forming a plurality of hollow portions in correspondence with the half molds (3, 4) by the pressure of the compressed air, which is sufficient for pressing at least sheet (2) against said half mold (4), so that sheets (1, 2) are subjected to a molding force in correspondence with the half molds (3, 4);
- e) cooling and hardening the sheets (1, 2) by cooling the walls of the half molds (3, 4) and
- f) opening the half molds (3, 4) and extracting the hollow body.

2. The process according to claim 1, **characterized in that** air channels (5) of half mold (4) and/or sheet (2) having diameters within a range of from 1 to 3 mm are employed.

3. Hollow bodies of thermoplastic material with hollow portions for automobile construction consisting of two sheets (1, 2), wherein the geometry of one of the two sheets (1, 2) corresponds to a sea/island structure, the sheets having one or more inlet openings in the sheet (2) facing away from the view side, namely a structural component having a supporting and impact strength functional property selected from trunk lining, trunk floor, door trim, rear shelf, cargo bay cover, pillar lining, rear seat bench lining, armrest cover, glovebox cover, knee protector or instrument panel, obtainable by a process according to claim 1 or 2.

4. The hollow bodies according to claim 3, **characterized in that** the area ratio of welded to non-welded areas of sheets (1, 2) is from 0.2:1 to 5:1, especially from 0.5:1 to 2:1.

## Revendications

1. Procédé pour la production de pièces creuses avec des domaines creuses par les étapes suivantes:
- a) chauffer au moins deux plaques (1, 2) en polypropylène, en acrylonitrile-butadiène-styrène (ABS) renforcé par fibres de verre, en polypropylène chargé en farine de bois et renforcé par fibres naturelles ou en polypropylène renforcé par fibres naturelles chacun ayant une épaisseur de couche de 0,8 à 3,5 mm, à leur température de plastification;
- b) insérer les plaques plastifiées (1, 2) l'une sur l'autre entre des demi-moules (3, 4) ayant une géométrie de dômes convexes correspondant à une structure d'îles, parmi lesquelles au moins une (4) est munie d'un ou plusieurs canaux à air comprimé (5);
- c) fermer les demi-moules (3, 4) et injecter d l'air comprimé à travers la plaque (2) et lier les plaques (1, 2) partiellement sous chaleur par soudage;
- d) former une pluralité de domaines creuses en correspondance avec les demi-moules (3, 4) par la pression de l'air comprimé qui est suffisante pour presser au moins la plaque (2) contre la semi-moule (4), de manière à soumettre les plaques (1, 2) à une force formatrice en correspondance avec les demi-moules (3, 4);
- e) faire refroidir et durcir les plaques (1, 2) par refroidissement des parois des demi-moules (3, 4); et
- f) ouvrir les demi-moules (3, 4) et récupérer la pièce creuse.

2. Procédé selon la revendication 1, **caractérisé en ce que** l'on utilise des canaux à air (5) de la demi-moule (4) et/ou de la plaque (2) ayant des diamètres comprises dans la gamme allant de 1 à 3 mm.

3. Pièce creuse en matériau thermoplastique avec des domaines creuses pour la construction d'automobiles consistant en deux plaques (1, 2), dans laquelle la géométrie d'une des deux plaques (1, 2) correspond à une structure mer/îlots, les plaques ayant une ou plusieurs orifices d'admission dans la plaque du coté opposé au côté visible (2), à savoir un composant structurel ayant une qualité fonctionnelle porteuse et résiliente choisi parmi un revêtement de coffre, un fond de coffre, un revêtement de portière, une plage arrière, un recouvrement de la zone de chargement, un revêtement de montant, un revêtement de banquette arrière, un recouvrement d'appui-bras, un couvercle de boîte à gants, un protège genou ou un tableau des instruments, que l'on peut obtenir par un procédé selon la revendication 1 ou 2.

4. Pièce creuse selon la revendication 3, **caractérisée en ce que** le rapport surfacique entre la surface soudée et la surface non-soudée des plaques (1, 2) est de 0,2/1 à 5/1, notamment de 0,5/1 à 2/1.
